# EUROPÄISCHE PATENTANMELDUNG

(11) **EP 3 170 993 A1**
(43) Veröffentlichungstag der Anmeldung: **24.05.2017**
(21) Anmeldenummer: 16195455.7
(22) Anmeldetag: 25.10.2016
(51) Int. Cl.: F01D 25/18

(54) **VENTILVORRICHTUNG UND STRAHLTRIEBWERK MIT EINER VENTILVORRICHTUNG**

(30) Priorität: 20.11.2015 DE 102015120192
(71) Anmelder: Rolls-Royce Deutschland Ltd & Co KG, 15827 Blankenfelde-Mahlow (DE)
(72) Erfinder: Blumrich, Markus, 10247 Berlin (DE); Klingsporn, Michael, 14532 Stahnsdorf (DE)
(74) Vertreter: Schmidt, Martin Michael

(57) **Zusammenfassung**

Es wird eine Ventilvorrichtung (32) eines Strahltriebwerks (1) mit einem mit einem Ventilsitz (33) zusammenwirkenden Ventilkörper (34) beschrieben, über den ein Strömungsweg (40) zwischen einem Ventileinlass (37) und einem Ventilauslass (52) sperrbar und zumindest teilweise freigebbar ist. Der Ventilkörper (34) ist in Abhängigkeit einer am Ventilkörper (34) betriebszustandsabhängig angreifenden Betätigungskraft, die aus einem im Bereich einer dem Ventileinlass (37) zugewandten Stirnfläche (36) des Ventilkörpers (34) anliegenden Fluiddruck und einer am Ventilkörper (34) anliegenden Schließkraft resultiert, mittels der der Ventilkörper (34) in Richtung eines den Strömungsweg (40) sperrenden Betriebszustandes betätigbar ist, zwischen den Strömungsweg (40) sperrenden und den Strömungsweg (40) zumindest teilweise freigebenden Betriebszuständen und durch eine Stelleinrichtung (44) in Abhängigkeit eines Umgebungsdruckes sowie unabhängig von der resultierenden Betätigungskraft in einen den Strömungsweg (40) freigebenden Betriebszustand überführbar. Der Strömungsweg (40) ist zumindest über die Stelleinrichtung (44) in einem Umfang freigebbar, dass ein Strömungsquerschnitt des Strömungswegs (40) über den gesamten Verlauf des Strömungswegs (40) zwischen dem Ventileinlass (37) und dem Ventilauslass (52) mindestens 80 % des Strömungsquerschnittes des Strömungsweges (40) im Bereich des Ventileinlasses (37) entspricht.

## Beschreibung

Die Erfindung betrifft eine Ventilvorrichtung gemäß der im Oberbegriff des Patentanspruches 1 näher definierten Art. Des Weiteren betrifft die Erfindung ein Strahltriebwerk mit einer solchen Ventilvorrichtung.

Bekannte Strahltriebwerke umfassen unter anderem einen Öltank und eine mit dem Öltank verbundene Ölpumpe, um beispielsweise in Lagerkammern angeordnete Lager mit Schmieröl beaufschlagen zu können. Im Betrieb eines Strahltriebwerks bildet sich während der Schmierung der Lager in den Lagerkammern ein Öltropfen führendes gasförmiges Luft-Öl-Gemisch. Das Luft-Öl-Gemisch wird aus den Lagerkammern in den Öltank geführt und von dort über eine Leitung in einen Ölabscheider bzw. einen sogenannten Breather eingeleitet. Im Bereich des beispielsweise als Zentrifugalabscheider ausgeführten Ölabscheiders werden Öl und Luft wieder voneinander getrennt und das im Bereich des Ölabscheiders bzw. der Einrichtung zum Abscheiden von Öltropfen abgeschiedene Öl zurück in den Ölkreislauf geführt. Die im Bereich des Ölabscheiders gereinigte Luft wird dagegen an die Umwelt abgegeben.

Damit die Ölpumpe mit ausreichender Förderleistung betreibbar ist, ist auf einer Saugseite der Ölpumpe, die mit dem Öltank verbunden ist, ein definierter Mindestdruck zu gewährleisten. Um den Mindestdruck im Bereich des Öltanks und damit auf der Saugseite der Ölpumpe auch während eines Flugbetriebs eines Flugzeugs bei gleichzeitigem Umgebungsdruck unterhalb des Mindestdruckes bereitstellen zu können, ist in der Leitung, über die das Luft-Öl-Gemisch aus dem Öltank zu dem Ölabscheider geführt wird, eine federbelastete Ventilvorrichtung angeordnet. Eine Federkraft einer Federeinrichtung definiert eine Ansprechgrenze der Ventilvorrichtung. Die Ansprechgrenze der Ventilvorrichtung ist derart ausgelegt, dass erst bei Überschreiten eines definierten Grenzdrucks im Innenraum des Öltanks ein Luft-Öl-Volumenstrom über die Ventilvorrichtung aus dem Öltank in Richtung des Ölabscheiders geführt werden kann. Über eine solche Ventilvorrichtung soll der Druck auf der Saugseite der Ölpumpe über den gesamten Betriebsbereich eines Flugzeuges auf ein Niveau oberhalb des Mindestdruck eingestellt werden.

Im Betrieb eines Strahltriebwerks werden in dem durch die Ventilvorrichtung geführten Luft-Öl-Volumenstrom vorhandene Öltropfen während der Durchströmung der Ventilvorrichtung in Öltropfen mit kleineren Tropfendurchmessern zerteilt bzw. zerstäubt. Die aus der Ventilvorrichtung austretenden kleinen Öltropfen sind aufgrund ihrer geringen Tropfengröße im Bereich des stromab der Ventilvorrichtung vorgesehenen Zentrifugalabscheiders nachteilhafterweise nur bedingt aus dem Luft-Öl-Volumenstrom abscheidbar, weshalb die aus dem Ölabscheider in Richtung der Umgebung eines mit dem Ölabscheider ausgeführten Strahltriebwerks ausströmende Abluft eine unerwünscht hohe Ölbeladung aufweisen kann. Die unerwünscht hohe Ölbeladung der Abluft erzeugt einen aus einem Strahltriebwerk austretenden Ölnebel, der als aus einem Triebwerksbrand resultierende Rauchfahne missinterpretiert werden und somit Irritationen verursachen kann. Des Weiteren ist ein durch die reduzierte Abscheideleistung auftretender Ölverlust eines Strahltriebwerkes unerwünscht hoch.

Aus der US 3,572,356 A ist ein Strahltriebwerk mit einem Hilfsgerätegetriebe bekannt, wobei im Bereich des Hilfsgerätegetriebes eine Ölpumpe und ein Öltank angeordnet sind. Mittels der Ölpumpe sind über ein Rohr Lager mit einem Ölschmierstrahl beaufschlagbar. Es ist weiterhin ein Ventil vorgesehen, über das ein Innenraum des Hilfsgerätegetriebes in die Atmosphäre entlüftet werden kann. Während eines Flugbetriebes eines Flugzeugs wird ein Ventilkörper des Ventils durch eine Federeinrichtung grundsätzlich in einer mit einem geschlossenen Betriebszustand des Ventils korrespondierenden Position gehalten. Übersteigt ein Druck in dem Innenraum des Hilfsgerätegetriebes eine Federkraft der Federeinrichtung, öffnet das Ventil und der Innenraum des Hilfsgerätegetriebes wird über das Ventil mit der Atmosphäre verbunden und entlüftet. Das Ventil weist weiterhin einen Federbalg mit einem zumindest teilweise evakuierten Hohlraum auf, über den das Ventil während eines Betriebs eines Flugzeuges auf geringer Flughöhe oder am Boden, während dem ein Umgebungsdruck eines Flugzeuges etwa dem atomosphärischen Druck auf Meereshöhe entspricht, in einen grundsätzlich geöffneten Zustand überführt wird. Hierdurch wird verhindert, dass im Betrieb des Strahltriebwerks ein Druck innerhalb der Lagerkammer auf einen Wert ansteigt, bei dem Öl aus den Lagerkammern durch angrenzende Dichtungen tritt und eine ungewünschte Verschmutzung von einer Flugkabine zugeführter Luft auftritt.

Es ist Aufgabe der vorliegenden Erfindung eine Ventilvorrichtung eines Strahltriebwerks und ein Strahltriebwerk mit einer derartigen Ventilvorrichtung zur Verfügung zu stellen, mittels welchen eine hohe Abscheideleistung eines Ölabscheiders erreicht wird.

Erfindungsgemäß wird diese Aufgabe mit einer Ventilvorrichtung bzw. mit einem Strahltriebwerk mit den Merkmalen des Patentanspruches 1 bzw. 15 gelöst.

Die erfindungsgemäße Ventilvorrichtung, die vorzugsweise in einem Luft-Öl-System eines Strahltriebwerk verwendbar ist, umfasst einen mit einem Ventilsitz zusammenwirkenden Ventilkörper, über den ein Strömungsweg für einen Öltropfen mitführenden Luft-Öl-Volumenstrom zwischen einem Ventileinlass und einem Ventilauslass sperrbar und zumindest teilweise freigebbar ist. Der Ventilkörper ist in Abhängigkeit einer am Ventilkörper betriebszustandsabhängig angreifenden Betätigungskraft, die aus einem im Bereich einer dem Ventileinlass zugewandten Stirnfläche des Ventilkörpers anliegenden Fluiddruck und einer am Ventilkörper anliegenden Schließkraft resultiert, mittels der der Ventilkörper in Richtung eines den Strömungsweg sperrenden Betriebszustandes betätigbar ist, zwischen den Strömungsweg sperrenden und den Strömungsweg zumindest teilweise freigebenden Betriebszuständen überführbar. Des Weiteren ist der Ventilkörper durch eine Stelleinrichtung in Abhängigkeit eines Umgebungsdruckes sowie unabhängig von der am Ventilkörper jeweils anliegenden resultierenden Betätigungskraft in einen den Strömungsweg freigebenden Betriebszustand überführbar.

Da Öltropfen mit Tropfendurchmessern kleiner als ein definierter Tropfendurchmesser in einem Ölabscheider nicht oder nicht in gewünschtem Umfang aus dem Luft-Öl-Volumenstrom bzw. dem Luft-Öl-Gemisch abscheidbar sind, ist der Strömungsweg bei der erfindungsgemäßen Ventilvorrichtung zumindest über die Stelleinrichtung in einem Umfang freigebbar, dass ein Strömungsquerschnitt des Strömungswegs über den gesamten Verlauf des Strömungswegs zwischen dem Ventileinlass und dem Ventilauslass mindestens 80 % des Strömungsquerschnittes des Strömungsweges im Bereich des Ventileinlasses entspricht.

Dadurch wird verhindert, dass das durch die Ventilvorrichtung strömende Luft-Öl-Gemisch im Bereich der Ventilvorrichtung in unerwünschtem Umfang gegenüber einer Geschwindigkeit des Luft-Öl-Gemischs im Bereich des Ventileinlasses beschleunigt wird. Der Erfindung liegt die Kenntnis zugrunde, dass eine zu hohe Beschleunigung des Luft-Öl-Gemischs im Bereich der Ventilvorrichtung eine unerwünschte Zerstäubung der in dem Luft-Öl-Gemisch mitgeführten Öltropfen verursacht und eine Abscheideleistung eines der Ventilvorrichtung nachgeschalteten Ölabscheiders negativ beeinflusst.

Mit der erfindungsgemäßen Ventilvorrichtung wird auf konstruktiv einfache Art und Weise erreicht, dass im Betrieb der erfindungsgemäßen Ventilvorrichtung in einem durch den Strömungsweg strömenden Luft-Öl-Gemisch mitgeführte Öltropfen in möglichst geringem Umfang zerstäubt bzw. verkleinert werden und eine Abscheideleistung eines stromab der Ventilvorrichtung angeordneten Ölabscheiders hoch ist.

Die erfindungsgemäße Ventilvorrichtung ermöglicht einerseits auf konstruktiv einfache Art und Weise, dass bei Vorliegen eines den Strömungsweg zumindest teilweise freigebenden Betriebszustandes des Ventilkörpers, in dem der Strömungsweg auch ohne einen an dem Ventilkörper anliegenden Fluiddruck eines Luft-Öl-Gemischs durch eine in Abhängigkeit des Umgebungsdruckes erfolgende stelleinrichtungsseitige Betätigung des Ventilkörpers freigegeben ist, Tropfengrößen von durch die Ventilvorrichtung geförderten Öltropfen eines Luft-Öl-Gemischs im Bereich der Ventilvorrichtung nicht in einem eine Abscheideleistung eines nachgeschalteten Ölabscheiders negativ beeinflussenden Umfang verkleinert werden.

Andererseits ist mit der erfindungsgemäßen Ventilvorrichtung ein für eine gewünscht hohe Förderleistung einer Ölpumpe erforderlicher Mindestdruck während eines Flugbetriebes eines Strahltriebwerkes eines Flugzeuges auf einer Saugseite einer Ölpumpe eines Strahltriebwerks in gewünschtem Umfang zur Verfügung stellbar. Hierfür unterbleibt die in Öffnungsrichtung der Ventilvorrichtung wirkende stelleinrichtungsseitige Betätigung des Ventilkörpers im Flugbetrieb bei entsprechend niedrigen Umgebungsdrücken und der ventileinlassseitige Fluiddruck stellt sich in Abhängigkeit der jeweils betriebszustandsabhängig am Ventilkörper anliegenden resultierenden Betätigungskraft oberhalb des Mindestdruckes mit geringem Betätigungsaufwand in gewünschtem Umfang ein.

Mittels der erfindungsgemäßen Ventilvorrichtung wird bei niedrigen Flughöhen oder am Boden der Austritt von Ölnebel aus einem Strahltriebwerk eines Flugzeuges auf kostengünstige Art und Weise vermieden sowie ein Ölverbrauch eines Strahltriebwerks und eine Verschmutzung eines Gehäuses eines Strahltriebwerks im Vergleich zu aus dem Stand der Technik bekannten Lösungen reduziert und eine Förderleistung einer Ölpumpe bei größeren Flughöhen gewährleistet.

Dabei besteht die Möglichkeit, dass der Ventilkörper bei einer konstruktiv einfachen und mit geringem Betätigungsaufwand betreibbaren Ausführungsform der erfindungsgemäßen Ventilvorrichtung über eine Federeinrichtung mit einer in Richtung seiner Schließposition wirkenden Federkraft beaufschlagt ist.

Besonders vorteilhaft ist es, wenn der Strömungsweg zumindest über die Stelleinrichtung in einem Umfang freigebbar ist, dass der Strömungsquerschnitt über den gesamten Verlauf des Strömungswegs zwischen dem Ventileinlass und dem Ventilauslass mindestens 100 % des Strömungsquerschnittes des Strömungsweges im Bereich des Ventileinlasses entspricht. Bei einer derartigen Ausführung der erfindungsgemäßen Ventilvorrichtung ist eine Zerstäubung von Öltropfen eines durch die Ventilvorrichtung geführten Luft-Öl-Gemischs im Bereich der Ventilvorrichtung besonders gering, da das Luft-Öl-Gemisch in der gesamten Ventilvorrichtung nicht gegenüber einer Geschwindigkeit im Bereich des Ventileinlasses beschleunigt wird.

Bei einer vorteilhaften Ausführung einer erfindungsgemäßen Ventilvorrichtung weisen insbesondere sämtliche den Strömungsweg begrenzende Bereiche des Ventilkörpers und/oder des Ventilsitzes jeweils einen Krümmungsradius auf, deren Betrag jeweils mindestens dem einhundertfünfzigsten Teil des Betrages des Strömungsquerschnittes des Strömungsweges im Bereich des Ventileinlasses entspricht. Hierdurch wird auf einfache Weise erreicht, dass das durch die Ventilvorrichtung geführte Luft-Öl-Gemisch keine unerwünscht starke Umlenkung erfährt und keine Strömungsabrisse erzeugt werden, durch die wiederum in dem Luft-Öl-Gemisch geführte Öltropfen verkleinert werden. Insbesondere sind sämtliche an den Strömungsweg grenzende Bauteile der Ventileinrichtung mit möglichst großen Radien oder vorzugsweise mit planen Flächen, deren Radius unendlich groß ist, ausgeführt.

Eine besonders geringe Zerstäubung von Öltropfen eines durch die Ventilvorrichtung geführten Luft-Öl-Gemischs wird erreicht, wenn die Krümmungsradien jeweils mindestens 1,5 mm groß sind.

Eine Zerstäubung von Öltropfen eines durch die Ventilvorrichtung geführten Luft-Öl-Gemischs ist insbesondere im Bereich des Ventilkörpers besonders gering, wenn die dem Ventileinlass zugewandte Stirnfläche des Ventilkörper zumindest bereichsweise eine wenigstens annähernd sphärisch ausgeführte Oberfläche aufweist.

Bei einer vorteilhaften Ausführung der erfindungsgemäßen Ventilvorrichtung wird eine günstige Strömungsführung des Luft-Öl-Gemischs dadurch erreicht, dass eine den Ventilkörper und den Ventilsitz zumindest bereichsweise umfassende Wandung vorgesehen ist, die mit in Bezug auf den Ventileinlass stromab des Ventilsitzes angeordneten und in Umfangsrichtung zueinander beabstandeten Auslassöffnungen ausgebildet ist.

Bei einer vorteilhaften Ausführung einer Ventilvorrichtung nach der Erfindung ist die Wandung radial innerhalb eines koaxial zur Wandung angeordneten Gehäuses angeordnet und in radialer Richtung von dem Gehäuse beabstandet, wobei das Gehäuse wenigstens eine Austrittsöffnung des Ventilauslasses aufweist. Eine derart ausgeführte Ventilvorrichtung ist auf einfache Weise montierbar, wobei die den Ventilkörper und den Ventilsitz umfassende Wandung auf einfache Weise in das Gehäuse eingesteckt werden kann. Sowohl die Wandung als auch das Gehäuse weisen insbesondere einen im Wesentlichen kreisförmigen Querschnitt auf, wobei ein Abstand zwischen der Wandung und dem Gehäuse in Umfangsrichtung der Ventilvorrichtung im Wesentlichen konstant ist. Die Austrittsöffnung des Ventilauslasses kann auf einfache Weise mit einer Leitung in Wirkverbindung gebracht werden, über die ein durch die Ventilvorrichtung geführtes Luft-Öl-Gemisch in Richtung einer Abscheideeinrichtung geführt wird.

Um die Ventilvorrichtung auf einfache Weise zwischen einer Grundposition, in der der Strömungsweg ohne anliegenden Druck an dem Ventilkörper geschlossen ist, und dem den Strömungsweg schließenden Betriebszustand verlagern zu können, kann die Stelleinrichtung ein zwischen einer ersten Position und einer zweiten Position verlagerbares und mit dem Ventilkörper zusammenwirkendes Stellelement aufweisen, wobei der Ventilkörper in der ersten Position des Stellelementes in einen den Strömungsweg sperrenden Betriebszustand überführbar ist, während der Ventilkörper in der zweiten Position des Stellelementes in den den Strömungsweg freigebenden Betriebszustand überführt ist.

Bei einer weiteren vorteilhaften Ausführungsform einer erfindungsgemäßen Ventilvorrichtung ist ein Aktor vorgesehen, mittels dem das Stellelement zwischen der ersten Position und der zweiten Position verlagerbar ist. Zudem kann eine weitere Federeinrichtung vorgesehen sein, die das Stellelement in Richtung der ersten Position oder in Richtung der zweiten Position mit einer Kraft beaufschlägt, so dass das Stellelement ohne Betätigung des Aktors in der ersten Position bzw. in der zweiten Position ist.

Das Stellelement ist bei einer konstruktiv einfach umzusetzenden Ausführungsform der erfindungsgemäßen Ventilvorrichtung über den Aktor elektromagnetisch verlagerbar. Grundsätzlich können auch vielfältige weitere Betätigungsmechanismen zur Verlagerung des Stellelements zwischen der ersten Position und der zweiten Position vorgesehen sein.

Bei einer weiteren vorteilhaften Ausführungsform der erfindungsgemäßen Ventilvorrichtung ist die Stelleinrichtung mit einem Federbalg ausgeführt, der einen luftdichten Hohlraum begrenzt, wobei eine Höhe des Federbalges in Stellrichtung des Ventilkörpers in Abhängigkeit eines Umgebungsdruckes des Federbalges variiert. Der Federbalg ist vorzugsweise einerseits mit dem Stellelement und andererseits mit einer Wandung der Ventilvorrichtung verbunden, die auf einer dem Ventilkörper abgewandten Seite des Stellelements angeordnet ist. Der Federbalg ist insbesondere derart ausgeführt, dass er bei einer Änderung eines Außendrucks eine Erstreckung in Bewegungsrichtung des Ventilkörpers ändert und hierdurch das Stellelement zwischen seiner ersten Position und in Richtung seiner zweiten Position und durch die Kopplung des Ventilkörpers an das Stellelement folglich der Ventilkörper zwischen seiner Grundposition, in der der Ventilkörper am Ventilsitz dichtend anliegt und den Strömungsweg sperrt, und seinem den Strömungsweg freigebenden Betriebszustand verlagert wird.

Die Stelleinrichtung weist bei einer vorteilhaften Ausführungsform der erfindungsgemäßen Ventilvorrichtung eine mit Druckluft beaufschlagbare Druckkammer auf, die zumindest bereichsweise von dem Stellelement begrenzt ist. Das Stellelement ist insbesondere bei Überschreiten eines Grenzdrucks in der Druckkammer zwischen seiner ersten Position und seiner zweiten Position verlagerbar. Die Druckkammer ist vorzugsweise auf einer dem Ventilkörper abgewandten Seite des Stellelements angeordnet und beispielsweise mit im Strahltriebwerk vorliegender Hochdruckluft versorgbar.

Um auf einfache Weise sicherzustellen, dass sich der Ventilkörper grundsätzlich in dem den Strömungsweg freigebenden Betriebszustand befindet, kann am Stellelement der Stelleinrichtung eine in Richtung der zweiten Position des Stellelementes wirkende Federkraft einer Federeinrichtung angreifen. Alternativ hierzu kann es auch vorgesehen sein, dass die Federeinrichtung das Stellelement mit einer Federkraft beaufschlagt, die das Stellelement in Richtung seiner ersten Position drückt.

Es wird weiterhin ein Strahltriebwerk mit einer Einrichtung zum Abscheiden von Öltropfen aus einem Luft-Öl-Volumenstrom vorgeschlagen, die mit einer Tankvorrichtung und mit einer im Bereich der Tankvorrichtung angeordneten Ventilvorrichtung ausgeführt ist, wobei über den Ventileinlass der Ventilvorrichtung ein Luft-Öl-Volumenstrom in die Ventilvorrichtung einleitbar und über eine Führungseinrichtung vom Ventilauslass der Ventilvorrichtung zu der Einrichtung zum Abscheiden von Öltropfen führbar ist.

Das erfindungsgemäße Strahltriebwerk hat den Vorteil, dass es durch eine gute Abscheideleistung von Öl aus dem der Einrichtung zum Abscheiden von Öltropfen bzw. der Abscheidevorrichtung zugeführten Luft-Öl-Volumenstrom bzw. dem Luft-Öl-Gemisch gekennzeichnet ist. Dies liegt darin begründet, dass im Bereich der Ventilvorrichtung Öltropfen des durch die Ventilvorrichtung geführten Luft-Öl-Gemischs nicht in unerwünschtem Umfang zerstäubt, d. h. nicht stark zerkleinert werden, wenn der Ventilkörper in dem den Strömungsweg freigebenden Betriebszustand vorliegt.

Da im Bereich der Abscheidevorrichtung große Öltropfen besser als kleine Öltropfen aus dem Luft-Öl-Gemisch abgeschieden werden können, weist die gereinigte Luft stromab der Abscheidevorrichtung vorteilhafterweise eine geringe Öl-Beladung auf, so dass die Bildung eines aus dem Strahltriebwerk ausströmenden Ölnebels reduziert ist. Zudem ist ein Ölverlust des Strahltriebwerks durch die verbesserte Abscheideleistung und die Gefahr einer Verschmutzung eines Triebwerksgehäuses vorteilhafterweise reduziert.

Bei dem erfindungsgemäßen Strahltriebwerk ist zusätzlich in vorteilhafter Weise eine Funktionalität der Ölpumpe in sämtlichen Betriebszuständen eines mit dem erfindungsgemäßen Strahltriebwerk ausgeführten Flugzeugs gewährleistet. Während eines Betriebs eines mit dem Flugtriebwerk ausgeführten Flugzeuges am Boden oder auf geringer Flughöhe ist ein Druck innerhalb der Tankvorrichtung bzw. des Öltanks durch den dann dem auf Meereshöhe vorliegenden Atmosphärendruck entsprechenden Umgebungsdruck des Flugzeuges ausreichend groß, so dass es für die Funktionalität der Ölpumpe unerheblich ist, wenn sich der Ventilkörper in einem den Strömungsweg freigebenden Betriebszustand befindet. Während eines Flugbetriebs mit größeren Flughöhen, zu dem der Umgebungsdruck eines Flugzeuges unterhalb des für den Betrieb einer Ölpumpe erforderlichen Mindestdruckes liegt, stellt sich in dem Innenraum der Tankvorrichtung bei entsprechender Auslegung der Ventilvorrichtung auf einfache Weise in gewünschtem Umfang ein Druck oberhalb des Mindestdruckes ein, womit ein Betrieb der Ölpumpe über den gesamten Betriebsbereich eines Flugzeuges sicher gewährleistet ist.

Die Führungseinrichtung zur Führung des Luft-Öl-Gemischs von dem Ventilauslass der Ventileinrichtung zu der Abscheidevorrichtung ist in einfacher Ausgestaltung der Erfindung als Leitung ausgebildet.

Sowohl die in den Patentansprüchen angegebenen Merkmale als auch die in den nachfolgenden Ausführungsbeispielen der erfindungsgemäßen Ventilvorrichtung bzw. des erfindungsgemäßen Strahltriebwerks angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen einer erfindungsgemäßen Ventilvorrichtung bzw. eines erfindungsgemäßen Strahltriebwerks ergeben sich aus den Patentansprüchen und den nachfolgend unter Bezugnahme auf die in der Zeichnung prinzipmäßig beschriebenen Ausführungsbeispielen, wobei zugunsten der Übersichtlichkeit jeweils für bau- und funktionsgleiche Bauteile dieselben Bezugszeichen verwendet werden.

Es zeigt:
- Fig. 1: eine stark schematisierte Längsschnittansicht eines Flugtriebwerkes mit einer im Bläsergehäuse angeordneten Nebenaggregategetriebeeinrichtung mit einem Luft-Öl-System, das eine Tankvorrichtung, eine Abscheidevorrichtung und eine Ventilvorrichtung aufweist;
- Fig. 2: eine stark schematisierte Teildarstellung des Flugtriebwerks gemäß Fig. 1, wobei das Luft-Öl-System ausschnittsweise näher ersichtlich ist;
- Fig. 3: eine vereinfachte Schnittdarstellung der Tankvorrichtung mit der Ventilvorrichtung des Luft-Öl-Systems gemäß Fig. 1 und Fig. 2;
- Fig. 4: eine vereinfachte Schnittdarstellung der Ventilvorrichtung gemäß Fig. 3 in Alleinstellung, wobei ein Ventilkörper der Ventilvorrichtung in einem einen Strömungsweg durch die Ventilvorrichtung schließenden Betriebszustand bzw. in einer Schließposition gezeigt ist;
- Fig. 5: eine Fig. 4 entsprechende Darstellung der Ventilvorrichtung, wobei der Ventilkörper in einem den Strömungsweg zumindest teilweise freigebenden Betriebszustand bzw. in einer Öffnungsposition gezeigt ist;
- Fig. 6: eine Fig. 3 und Fig. 4 entsprechende Darstellung der Ventilvorrichtung, wobei der Ventilkörper durch eine Stelleinrichtung in einen den Strömungsweg freigebenden Betriebszustand bzw. in eine Öffnungsstellung verlagert ist;
- Fig. 7: eine schematische dreidimensionale Ansicht der Ventilvorrichtung, wobei eine Wandung der Ventilvorrichtung zu einem Gehäuse der Ventilvorrichtung beabstandet angeordnet ist;
- Fig. 8 bis 10: vereinfachte Schnittdarstellungen einer alternativ ausgeführten Ventilvorrichtung, wobei der Ventilkörper der Ventilvorrichtung in Fig. 5 bis Fig. 7 entsprechenden Stellungen gezeigt ist; und
- Fig. 11 u. 12: vereinfachte Schnittdarstellungen einer weiteren alternativ ausgeführten Ventilvorrichtung, wobei der Ventilkörper der Ventilvorrichtung in den in Fig. 5 und Fig. 7 bzw. Fig. 8 und Fig. 10 dargestellten Positionen entsprechenden Stellungen gezeigt ist.

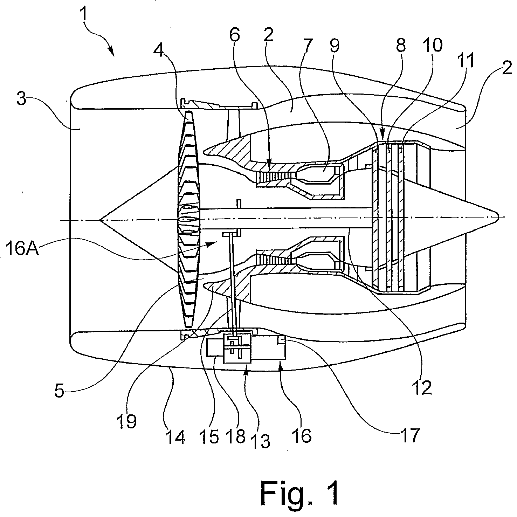

Fig. 1 zeigt ein Flugtriebwerk bzw. Strahltriebwerk 1 in einer Längsschnittansicht. Das Strahltriebwerk 1 ist mit einem Nebenstromkanal 2 und einem Einlaufbereich 3 ausgebildet, wobei sich an den Einlaufbereich 3 stromab ein Bläser bzw. Fan 4 in an sich bekannter Art und Weise anschließt. Wiederum stromab des Bläsers 4 teilt sich der Fluidstrom im Strahltriebwerk 1 in einen Nebenstrom und einen Kernstrom auf, wobei der Nebenstrom durch den Nebenstromkanal 2 und der Kernstrom in einen Triebwerkskern 5 strömt, der wiederum in an sich bekannter Art und Weise mit einer Verdichtereinrichtung 6, einem Brenner 7 und einer Turbineneinrichtung 8 ausgeführt ist.

Die Turbineneinrichtung 8 weist vorliegend drei Rotorvorrichtungen 9, 10 und 11 auf, welche in im Wesentlichen vergleichbarer Bauweise ausgebildet sind und mit einer Triebwerkswelle 12 verbunden sind.

Das Strahltriebwerk 1 ist mit einer Nebenaggregategetriebeeinrichtung 13 in einem äußeren Triebwerksgehäuse 14 ausgebildet, das den Nebenstromkanal 2 begrenzt und den äußeren Umfangsbereich des Strahltriebwerkes 1 darstellt. Die Nebenaggregategetriebeeinrichtung 13 ist vorliegend über eine in radialer Richtung des Stahltriebwerks 1 verlaufende Antriebswelle 15 über ein inneres Getriebe 16A mit der Triebwerkswelle 12 verbunden und wird somit von der Triebwerkswelle 12 im Betrieb des Stahltriebwerkes 1 angetrieben bzw. mit Drehmoment versorgt. Von der Nebenaggregategetriebeeinrichtung 13 werden verschiedene Nebenaggregate 16 und eine als Ölabscheider 17 ausgeführte Einrichtung zum Abscheiden von Öltropfen aus einem Luft-Öl-Volumenstrom, der auch als Breather bezeichnet wird, in gewünschtem Umfang mit Drehmoment beaufschlagt. Zusätzlich ist im Bereich der Nebenaggregategetriebeeinrichtung 13 auch eine Tankvorrichtung 18 vorgesehen, die ein Hydraulikfluidreservoir darstellt, aus dem Öl zur Kühlung und Schmierung verschiedener Bereiche des Strahltriebwerks 1, wie Lagereinrichtungen, Zahnradpaarungen des inneren Getriebes 16A und der Nebenaggregategetriebeeinrichtung 13 sowie weiterer zu kühlender und zu schmierender Baugruppen des Strahltriebwerks 1, entnommen wird.

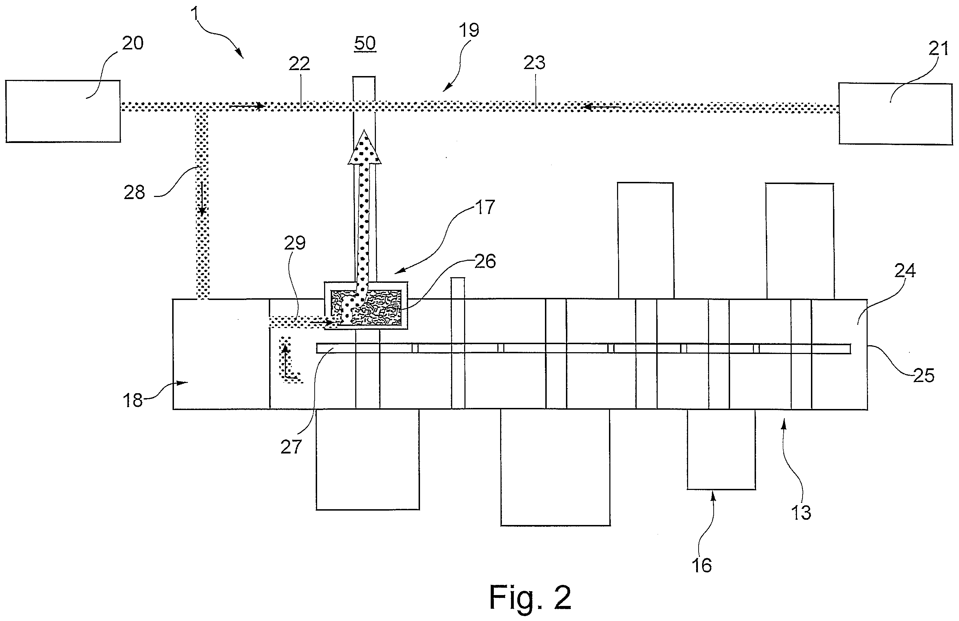

Fig. 2 zeigt in stark schematisierter Form einen Ausschnitt eines Luft-Öl-Systems 19 des Strahltriebwerks 1, das die Nebenaggregategetriebeeinrichtung 13 mit den Nebenaggregaten 16, den Ölabscheider 17 und die Tankvorrichtung 18 umfasst. Es sind vorliegend weiterhin stark schematisiert gezeigte Lagerkammern 20, 21 dargestellt, die im Betrieb des Strahltriebwerks 1 mit Öl aus der Tankvorrichtung 18 zum Schmieren und Kühlen beaufschlagt werden.

Es ist jeweils ein Luft-Öl-Volumenstrom bzw. ein Luft-Öl-Gemisch aus der vorderen Lagerkammer 20 und der hinteren Lagerkammer 21 über eine Leitung 22 bzw. 23 in Richtung einer gemeinsamen Leitung 28 führbar, die wiederum in die Tankvorrichtung 18 bzw. den Öltank mündet. Mit der Tankvorrichtung 18 ist hier eine als Leitung 29 ausgebildete Führungseinrichtung verbunden, über die ein Luft-Öl-Volumenstrom von der Tankvorrichtung 18 vorliegend dem Ölabscheider 17 zugeführt wird.

In einem Innenraum des Ölabscheiders 17 ist ein poröser Bereich 26 drehbar angeordnet, der von dem aus der Tankvorrichtung 18 ausströmenden Luft-Öl-Volumenstrom durchströmbar ist. Der poröse Bereich 26 ist vorliegend über ein Zahnrad 27 von der Nebenaggregategetriebeeinrichtung 13 antreibbar und wirkt als Zentrifuge, um den Anteil an Öl des durch den porösen Bereich 26 strömenden Luft-Öl-Volumenstroms soweit als möglich reduzieren zu können. Dabei wird der Ölanteil des Luft-Öl-Volumenstroms im Ölabscheider 17 im Bereich des porösen Bereichs 26 einerseits wie beim Durchströmen eines Prallfilters und andererseits wie im Bereich einer Zentrifuge durch die Rotation des porösen Bereichs 26 durch Abscheiden des Öls aus dem Luft-Öl-Volumenstrom reduziert. Das im Bereich des porösen Bereichs 26 aus dem Luft-Öl-Volumenstrom ausgefilterte Öl wird im äußeren Bereich des Ölabscheiders 17 in nicht näher dargestellter Art und Weise über eine Pumpeneinrichtung abgesaugt und zurück in die Tankvorrichtung 18 geführt. Der aus dem Ölabscheider 17 in Richtung der Umgebung 50 ausströmende Luftstrom weist eine Beladung an Öl auf, die gegenüber einer Beladung des dem Ölabscheider 17 zugeführten Luft-Öl-Volumenstroms an Öl reduziert ist.

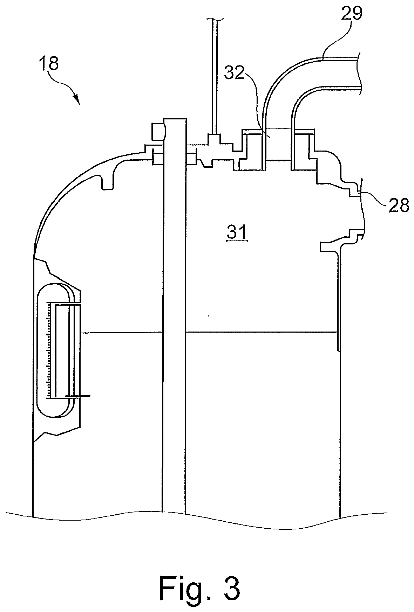

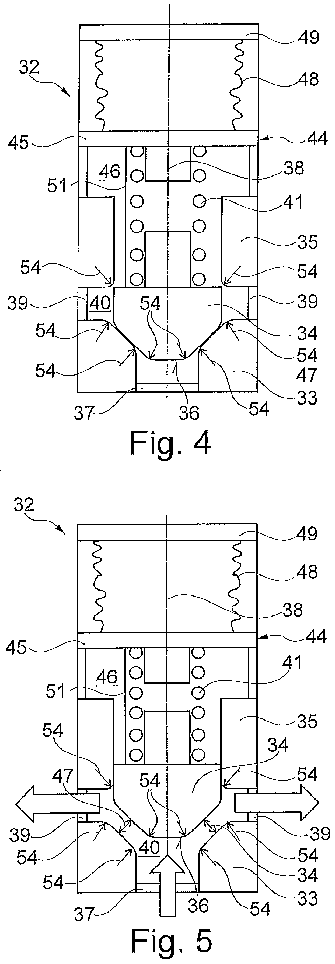

In Fig. 3 ist die Tankvorrichtung 18 näher gezeigt. Der Tankvorrichtung 18 wird ein Luft-Öl-Volumenstrom über die als Leitung 28 ausgebildete Führungseinrichtung zugeführt und in einen Innenraum 31 der Tankvorrichtung 18 geleitet. Vorliegend in einem oberen Bereich der Tankvorrichtung 18 grenzt die Leitung 29 an die Tankvorrichtung 18, wobei in einem Verbindungsbereich der Leitung 29 mit der Tankvorrichtung 18 eine in Fig. 4 bis Fig. 7 näher beschriebene Ventilvorrichtung 32 angeordnet ist.

Die vorliegend im Wesentlichen rotationssymmetrisch zu einer Mittelachse 38 ausgeführte Ventilvorrichtung 32 weist einen Ventilsitz 33 und einen zum Zusammenwirken mit dem Ventilsitz 33 vorgesehenen Ventilkörper 34 auf, wobei sowohl der Ventilsitz 33 als auch der Ventilkörper 34 innerhalb einer einen im Wesentlichen kreisförmigen Querschnitt aufweisenden Wandung 35 angeordnet sind. Es sind weiterhin ein einen hier kreisförmigen Strömungsquerschnitt aufweisender Ventileinlass 37 und mehrere bezüglich der Mittelachse 38 umfangsseitig verteilt angeordnete Auslassöffnungen 39 vorgesehen, wobei zwischen dem Ventileinlass 37 und den Auslassöffnungen 39 ein Strömungsweg 40 für den der Ventilvorrichtung 32 von der Tankvorrichtung 18 zugeführten Luft-Öl-Volumenstrom ausgebildet ist.

Zudem weist die Ventilvorrichtung 32 eine Federeinrichtung 41 auf, die den Ventilkörper 34 mit einer Kraft beaufschlagt, die den Ventilkörper 34 in seine in Fig. 4 dargestellte, mit dem Ventilsitz 33 zusammenwirkende und den Strömungsweg 40 zwischen dem Ventileinlass 37 und den Auslassöffnungen 39 verschließenden Betriebszustand bzw. in eine Schließposition drückt. Ein Durchströmen des Strömungswegs 40 ist in der Schließposition des Ventilkörpers 34 durch ein Zusammenwirken des Ventilkörpers 34 mit dem Ventilsitz 33 verhindert. Durch den weiterhin der Tankvorrichtung 18 zugeführten Luft-Öl-Volumenstrom steigt der Druck im Innenraum 31 der Tankvorrichtung 18 an.

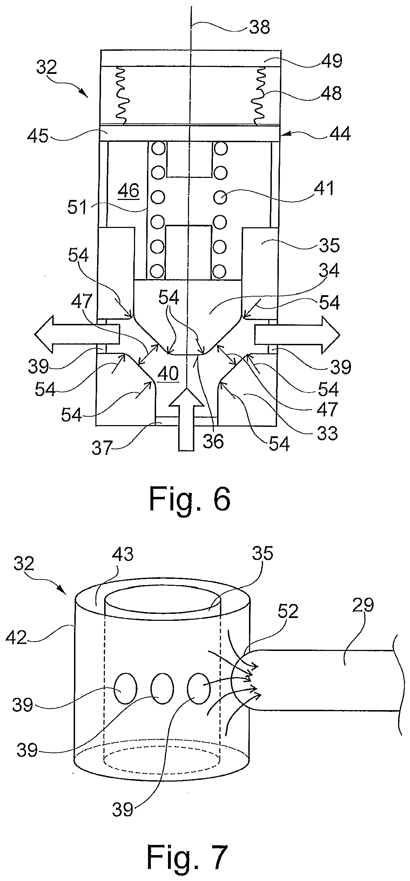

Wie in Fig. 7 schematisch dargestellt, ist die die Auslassöffnungen 39 aufweisende Wandung 35 in einem vorliegend ebenfalls einen kreisförmigen Querschnitt aufweisenden Gehäuse 42 angeordnet. Die Wandung 35 und das Gehäuse 42 sind im Wesentlichen konzentrisch zu der Mittelachse 38 angeordnet, so dass die Wandung 35 und das Gehäuse 42 einen Ringraum 43 begrenzen. Das Gehäuse 42 bildet einen Ventilauslass 52 der Ventilvorrichtung 32, der vorliegend eine einen kreisförmigen Strömungsquerschnitt aufweisende Austrittsöffnung hat. Im Bereich der Austrittsöffnung ist die Leitung 29 an die Ventilvorrichtung 32 angebunden.

Da das Gehäuse 42 einen Teil der Ventilvorrichtung 32 darstellt, erstreckt sich der Strömungsweg 40 der Ventilvorrichtung 32 von dem Ventileinlass 37 bis zu dem Ventilauslass 52. Alternativ hierzu kann das Gehäuse 42 beispielsweise durch ein angrenzendes Bauteil gebildet sein, das mit einer Bohrung ausgeführt ist.

Wird der Tankvorrichtung 18 im Betrieb des Strahltriebwerks 1 über die Leitung 28 ein Luft-Öl-Volumenstrom zugeführt und befindet sich der Ventilkörper 34 in der Schließposition, steigt der Druck in dem Innenraum 31 der Tankvorrichtung 18 an. Hierdurch nimmt eine auf eine Stirnfläche 36 des Ventilkörpers 34 in Öffnungsrichtung der Ventilvorrichtung 32 wirkende Kraft zu, die der an dem Ventilkörper 34 angreifenden Federkraft der Federeinrichtung 41 entgegenwirkt.

Übersteigt die aus dem im Innenraum 31 der Tankvorrichtung 18 vorliegenden Druck resultierende Öffnungskraft die Federkraft der Federeinrichtung 41, wird der Ventilkörper 34 entgegen der Federkraft der Federeinrichtung 41 aus seiner Schließposition in einen beispielhaft in Fig. 5 gezeigten, den Strömungsweg 40 zumindest teilweise freigebenden Betriebszustand bzw. in eine Öffnungsposition verlagert. Ein Luft-Öl-Volumenstrom wird bei geöffneter Ventilvorrichtung 32 aus dem Innenraum 31 der Tankvorrichtung 18 durch den Ventileinlass 37 und den Strömungsweg 40 sowie über die Auslassöffnungen 39 und den Ringraum 43 zu dem Ventilauslass 52 geführt und von dort über die Leitung 29 in Richtung des Ölabscheiders 17 weitergeleitet.

Wenn der Ventilkörper 34 in einer Öffnungsposition vorliegt und ein Luft-Öl-Volumenstrom durch die Ventilvorrichtung 32 strömt, sinkt der Druck in dem Innenraum 31 der Tankvorrichtung 18. Sobald die aus dem anliegenden Druck auf den Ventilkörper 34 wirkende Kraft kleiner als die Federkraft der Federeinrichtung 41 ist, wird der Ventilkörper 34 durch die Federkraft der Federeinrichtung 41 wiederum in seine Schließposition überführt, wodurch die Ventilvorrichtung 32 geschlossen wird und ein Durchströmen des Strömungswegs 40 der Ventilvorrichtung 32 verhindert ist.

Die Ventilvorrichtung 32 weist weiterhin eine Stelleinrichtung 44 mit einem Stellelement 45 auf, das zusammen mit dem Ventilkörper 34 und der Wandung 35 eine einen Innenraum der Ventilvorrichtung 32 bildende Kammer 46 begrenzt. Auf einer dem Ventilkörper 34 abgewandten Seite des Stellelements 45 ist hier ein Federbalg 48 angeordnet, der luftdicht ausgeführt ist und ein definiertes Volumen aufweist. Der Federbalg 48 ist einerseits mit dem Stellelement 45 und andererseits mit einer Wandung 49 verbunden, die an einer dem Ventilkörper 34 abgewandten Seite des Stellelements 45 angeordnet ist. Der Federbalg 48 ändert in Abhängigkeit des Außendrucks eine Erstreckung bzw. Höhe in Richtung der Mittelachse 38, so dass über den Federbalg 48 ein Abstand zwischen der Wandung 49 und dem Stellelement 45 variierbar ist.

Die in den Fig. 4 und Fig. 5 dargestellten Zustände der Ventilvorrichtung 32 stellen sich während eines Flugbetriebes mit einem geringen Umgebungsdruck ein. Hierbei wird das Stellelement 45 durch die Federkraft des Federbalgs 48 bzw. durch den Druck in dem Federbalg 48 und in der Kammer 46 in einer ersten Position gehalten. Dies resultiert aus der Tatsache, dass der mit dem Umgebungsdruck korrespondierende Druck in der Kammer 46 einen Wert aufweist, der zu gering ist, um das Stellelement 45 entgegen der Federkraft des Federbalgs 48 zu bewegen.

Mit sinkender Flughöhe nimmt der mit dem Umgebungsdruck des Strahltriebwerkes 1 korrespondierende Druck in der Kammer 46 zu. Übersteigt eine aus dem Druck in der Kammer 46 resultierende und an dem Stellelement 45 anliegende Kraft die Federkraft des Federbalgs 48, wird das Stellelement 45 in eine zweite, in Fig. 6 näher gezeigte Position verlagert.

Das Stellelement 45 ist über einen nur schematisch dargestellten Anschlag 51 mit dem Ventilkörper 34 verbunden, wobei der Anschlag 51 den Ventilkörper 34 zumindest bereichsweise untergreift. Der Anschlag 51 ermöglicht eine Bewegung des Ventilkörpers 34 zwischen seiner Schließposition und seiner Öffnungsposition. Zusätzlich ist der Anschlag 51 derart ausgelegt, dass der Ventilkörper 34 sich in der ersten Position des Stellelements 45 und geringem am Ventilkörper 34 anliegenden Druck der Tankvorrichtung 18 sich in seiner Schließposition befindet. Wird das Stellelement 45 in seine zweite Position verlagert, wird der Ventilkörper 34 von dem Anschlag 51 gemeinsam mit dem Stellelement 34 in die in Fig. 6 gezeigte Öffnungsstellung bewegt, in der der Strömungsweg 40 auch ohne Anliegen eines entsprechenden Drucks in dem Innenraum 31 der Tankvorrichtung 18 geöffnet ist und der Luft-Öl-Volumenstrom von dem Ventileinlass 37 in Richtung des Ventilauslasses 52 strömen kann.

Die Funktionalität der Ölpumpe kann auch bei offenem Strömungsweg 40 auf einfache Weise sichergestellt werden, wenn die Federkraft des Federbalgs 48 derart gewählt ist, dass der Strömungsweg erst geöffnet ist, wenn ein Druck in dem Innenraum 31 der Tankvorrichtung 18 zur Bereitstellung einer gewünschten Förderleistung der Ölpumpe groß genug ist.

Je nach Wahl der Federkraft des Federbalgs 48 ist dabei einstellbar, bei welchem Atmosphärendruck, der mit einer Flughöhe korreliert, das Stellelement 45 zwischen seiner ersten Position und seiner zweiten Position verlagert wird. Beispielsweise ist der Federbalg 48 derart ausgeführt, dass das Stellelement 45 bei einem Überschreiten einer Flughöhe von etwa 6000 Metern oder mehr von der zweiten Position in die erste Position und bei einem Unterschreiten dieser Flughöhe von der ersten Position in die zweite Position überführt wird.

Grundsätzlich werden Öltropfen bei einem Durchströmen des Strömungswegs 40 im Bereich der Ventilvorrichtung 32 in der zweiten Position des Steilelements 45, zu der der Ventilkörper 34 den Strömungsweg 40 unabhängig von einer an diesem angreifenden Stellkraft freigibt, die aus der Federkraft der Federeinrichtung 41 und dem jeweils am Ventilkörper 34 anliegenden Druck im Öltank 18 resultiert, in geringerem Umfang verkleinert, als in einem Betriebszustand der Ventilvorrichtung 32, zu dem sich das Stellelement 45 in der ersten Position befindet. Dies resultiert aus der Tatsache, dass der Strömungsweg 40 in der zweiten Position des Stellelements 45 aufgrund einer anhaltenden stelleinrichtungsseitigen Betätigung des Ventilkörpers 34 durch den Ventilkörper 34 dauerhaft freigeben ist und die Öltropfen beim Durchströmen der Ventilvorrichtung 32 nur in geringem Umfang mechanisch belastet und zerstäubt werden.

Im Unterschied hierzu ist eine mechanische Beeinflussung der Tropfengröße von durch die Ventilvorrichtung 32 bzw. durch dessen Strömungsweg 40 in geöffnetem Betriebszustand der Ventilvorrichtung 32 geführten Öltropfen bei gleichzeitig in seiner ersten Position vorliegendem Stellelement 45 höher, da der Ventilkörper 34 dann lediglich in Abhängigkeit der an diesem angreifenden und aus der Federkraft der Federeinrichtung 41 und dem im Innenraum 31 des Öltanks 18 wirkenden Druck resultierenden Stellkraft zwischen einer den Strömungsweg 40 freigebenden Stellung und seiner Schließstellung verstellt wird und während ungünstiger Betriebszustandsverläufe eine oszillierende Bewegung ausführt. Eine solche oszillierende Bewegung des Ventilkörpers 34 erhöht den Zerstäubungsgrad der durch die Ventilvorrichtung 32 geführten Öltropfen, weil diese in dem dann variierenden Strömungsquerschnitt des Strömungsweges 40 im Bereich zwischen dem Ventilkörper 34 und dem damit zusammenwirkenden Ventilsitz 33 einerseits in unerwünschtem Umfang beschleunigt werden und andererseits erhöhten mechanischen Belastungen ausgesetzt sind.

Da im Bereich des Ölabscheiders 17 funktionsbedingt größere Öltropfen besser als kleinere Öltropfen aus dem dem Ölabscheider 17 zugeführten Luft-Öl-Volumenstrom abtrennbar sind, weist die der Umgebung 50 zugeführte gereinigte Luft in der zweiten Position des Stellelements 45 stromab des Ölabscheiders 17 eine geringere Öl-Beladung auf als in der ersten Position des Stellelements 45. Hierdurch wird ein Auftreten eines sogenannten Ölnebels in der zweiten Position des Stellelements 45 vermieden.

Eine Zerstäubung bzw. Verkleinerung von Öltropfen des durch die Ventilvorrichtung 32 geführten Luft-Öl-Volumenstroms ist mit der Ventilvorrichtung 32 in der zweiten Position des Stellelements 45 auch deshalb sehr gering, da ein Strömungsquerschnitt des Strömungswegs 40 in jedem Bereich größer oder gleich 80 %, insbesondere 100 % des Strömungsquerschnitts des Ventileinlasses 37 ist. Durch diese Maßnahme wird auf einfache Weise eine unerwünscht große Beschleunigung des Luft-Öl-Volumenstroms im Bereich der Ventilvorrichtung 32 verhindert, wodurch eine Aufspaltung von größeren Öltropfen in kleinere Öltropfen verhindert oder zumindest sehr gering ist.

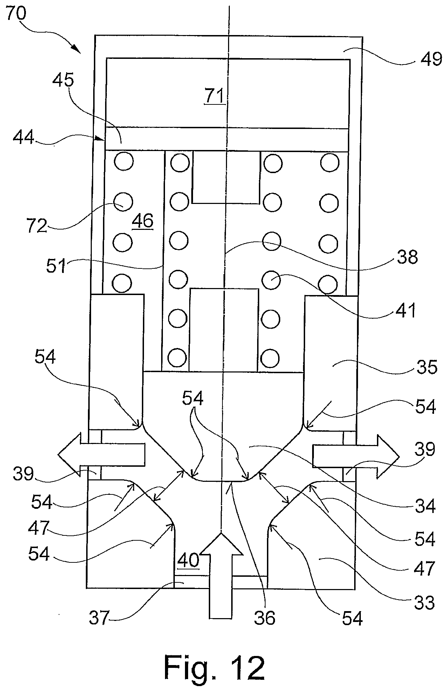

Der Strömungsquerschnitt im Strömungsweg 40 berechnet sich beispielsweise im Bereich des Ventilkörpers 34 und des Ventilsitzes 33 durch eine Aufsummierung von Flächen, die in Fig. 5, Fig. 6, Fig. 9, Fig. 10 und Fig. 12 durch die Bezugszeichen 47 näher gekennzeichnet sind.

Um eine Verkleinerung von Öltropfen des durch die Ventilvorrichtung 32 geführten Luft-Öl-Volumenstroms in der ersten Position oder in der zweiten Position des Stellelements 45 weiter zu reduzieren, weisen an den den Ventileinlass 37 mit dem Ventilauslass 52 verbindenden Strömungsweg 40 grenzende Bereiche der Ventilvorrichtung 32, insbesondere Oberflächen des Ventilsitzes 33 und des Ventilkörpers 34, keine scharfen Kanten auf, sondern sind mit Krümmungsradien 54 ausgeführt, über die insbesondere plane, an den Strömungsweg 40 grenzende Oberflächenbereiche vorzugsweise des Ventilsitzes 33 und des Ventilkörpers 34 miteinander verbunden sind. Um eine Verkleinerung der Öltropfen besonders effektiv zu verhindern, sind die Krümmungsradien 54 möglichst groß ausgeführt. Die Krümmungsradien 54 sind hier größer als der Betrag des Strömungsquerschnittes des Ventileinlasses 37 geteilt durch 150 und größer als 1,5 mm. Die Krümmungsradien 54 werden vorzugsweise so groß wie möglich ausgeführt.

Vorliegend ist eine dem Ventilsitz 33 zugewandte Oberfläche des Ventilkörpers 34 sphärisch ausgeführt, wobei der Ventilsitz 33 an die Form des Ventilkörpers 34 angepasst ist. Auch hierdurch kann die Aufspaltung von großen Öltropfen in kleine Öltropfen beim Durchströmen der Ventilvorrichtung 32 durch den Luft-Öl-Volumenstrom vorteilhafterweise reduziert werden.

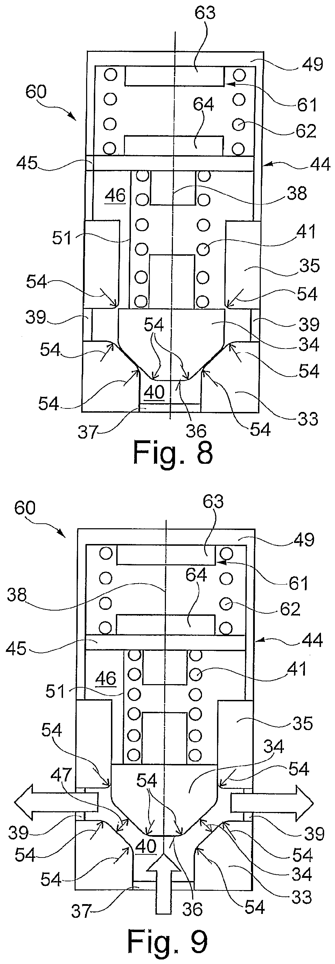

In Fig. 8 bis Fig. 10 und Fig. 11 und Fig. 12 sind jeweils weitere Ventilvorrichtungen 60 bzw. 70 gezeigt, die im Folgenden näher beschrieben werden. Dabei wird lediglich auf die Unterschiede der Ventilvorrichtungen 60, 70 zu der Ventilvorrichtung 32 eingegangen.

Die Ventilvorrichtung 60 unterscheidet sich von der Ventilvorrichtung 32 dadurch, dass die Stelleinrichtung 44 auf einer dem Ventilkörper 34 abgewandten Seite des Stellelements 45 einen elektromagnetischen Aktor 61 und eine weitere Federeinrichtung 62 aufweist. Mittels des von einem Motorsteuergerät des Strahltriebwerks 1 betätigbaren Aktors 61 ist das Stellelement 45 aktiv zwischen der ersten Position und der zweiten Position verlagerbar, so dass der Ventilkörper 34 unabhängig von einem aktuell wirkenden Außendruck zwischen der Grundposition und der Öffnungsstellung verlagerbar ist.

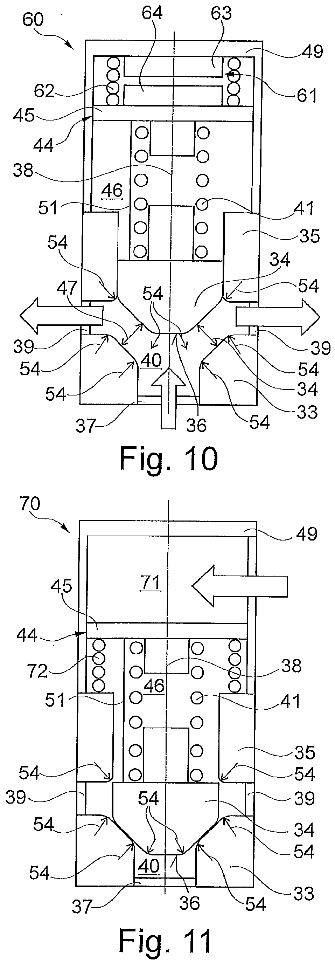

Bei der gezeigten Ausführung stützt sich die weitere Federeinrichtung 62 sowohl an dem Stellelement 45 als auch an der Wandung 49 ab, so dass sich das Stellelement 45 bei nicht betätigtem Aktor 61 in seiner ersten Position befindet. Zur Überführung des Stellelements 45 von der ersten Position in die zweite Position wird der Aktor 61 derart angesteuert, dass sich ein im Bereich des Stellelements 45 angeordnetes magnetisches Element 63 und ein im Bereich der Wandung 49 angeordnetes magnetisches Element 64 entgegen der Federkraft der weiteren Federeinrichtung 62 anziehen und gemäß Fig. 10 insbesondere miteinander in Anlage kommen.

Bei der Ventilvorrichtung 70 ist von dem Stellelement 45, der Wandung 49 und der seitlichen Wandung 35 eine Druckkammer 71 gebildet, die betriebszustandsabhängig mit Druckluft bzw. Kompressorluft versorgbar ist. Weiterhin ist eine zusätzliche Federeinrichtung 72 vorgesehen, die sich einerseits an dem Stellelement 45 und andererseits an einem fest mit der Wandung 35 verbundenen Element 73 abstützt. Die zusätzliche Federeinrichtung 72 drückt das Stellelement 45 somit in Richtung seiner zweiten Position, in der der Ventilkörper 34 den Strömungsweg durch die Ventilvorrichtung 70 unabhängig von einem in dem Innenraum 31 der Tankvorrichtung 18 vorliegenden Druck freigibt.

In unbedrucktem Zustand der Druckkammer 71 befindet sich das Stellelement 45 vorliegend in der zweiten Position, wohingegen das Stellelement 45 bei mit Kompressorluft bedruckter Druckkammer 71 in seiner ersten Position vorliegt.

Es kann auch vorgesehen sein, dass die Druckkammer 71 in jedem Betriebszustand mit Kompressorluft versorgt ist. Da der Druck der Kompressorluft bei einem Flug in größerer Höhe abnimmt, kann durch eine entsprechende Wahl der Federstärke der zusätzlichen Federeinrichtung 72 erreicht werden, dass das Stellelement 45 ohne separate Steuerung zwischen der ersten Position und der zweiten Position verlagert wird.

Bei einer hierzu alternativen Ausführung einer Ventilvorrichtung kann es auch vorgesehen sein, dass der Ventilkörper in bedrucktem Zustand einer Druckkammer in seiner Öffnungsstellung und in unbedrucktem Zustand der Druckkammer in seiner Schließposition vorliegt.

Grundsätzlich können die Tankvorrichtung und der Ölabscheider bei alternativen Ausführungen der Erfindung in beliebigen Bereichen des Strahltriebwerks angeordnet sein, wobei die Tankvorrichtung insbesondere in Form von wenigstens einer Leitung mit dem Ölabscheider verbunden ist, über die ein über die Ventilvorrichtung aus der Tankvorrichtung abgeführter Luft-Öl-Volumenstrom dem Ölabscheider zuführbar ist.

### Bezugszeichenliste

- 1: Flugtriebwerk, Strahltriebwerk
- 2: Nebenstromkanal
- 3: Einlaufbereich
- 4: Bläser
- 5: Triebwerkskern
- 6: Verdichtereinrichtung
- 7: Brenner
- 8: Turbineneinrichtung
- 9, 10, 11: Rotorvorrichtung
- 12: Triebwerkswelle
- 13: Nebenaggregategetriebeeinrichtung
- 14: Triebwerksgehäuse
- 15: Antriebswelle
- 16: Nebenaggregate
- 16A: inneres Getriebe
- 17: Einrichtung zum Abscheiden von Öl; Ölabscheider
- 18: Tankvorrichtung; Öltank
- 19: Luft-Öl-System
- 20, 21: Lagerkammer
- 22, 23: Leitung
- 24: Innenraum der Nebenaggregategetriebeeinrichtung
- 25: Gehäuse der Nebenaggregategetriebeeinrichtung
- 26: poröser Bereich des Ölabscheiders
- 27: Zahnrad
- 28, 29: Führungseinrichtung; Leitung
- 31: Innenraum der Tankvorrichtung
- 32: Ventilvorrichtung
- 33: Ventilsitz
- 34: Ventilkörper
- 35: Wandung
- 36: Stirnfläche des Ventilkörpers
- 37: Ventileinlass
- 38: Mittelachse
- 39: Auslassöffnung
- 40: Strömungsweg
- 41: Federeinrichtung
- 42: Gehäuse
- 43: Ringraum
- 44: Stelleinrichtung
- 45: Stellelement
- 46: Kammer
- 47: Fläche
- 48: Einrichtung; Federbalg
- 49: Wandung
- 50: Umgebung
- 51: Anschlag
- 52: Ventilauslass
- 54: Krümmungsradius
- 60: Ventilvorrichtung
- 61: Aktor
- 62: weitere Federeinrichtung
- 63, 64: magnetisches Element
- 70: Ventilvorrichtung
- 71: Druckkammer
- 72: zusätzliche Federeinrichtung

## Patentansprüche

1. Ventilvorrichtung (32, 60, 70) mit einem mit einem Ventilsitz (33) zusammenwirkenden Ventilkörper (34), über den ein Strömungsweg (40) für einen Öltropfen mitführenden Luft-Öl-Volumenstrom zwischen einem Ventileinlass (37) und einem Ventilauslass (52) sperrbar und zumindest teilweise freigebbar ist, wobei der Ventilkörper (34) in Abhängigkeit einer am Ventilkörper (34) betriebszustandsabhängig angreifenden Betätigungskraft, die aus einem im Bereich einer dem Ventileinlass (37) zugewandten Stirnfläche (36) des Ventilkörpers (34) anliegenden Fluiddruck und einer am Ventilkörper (34) anliegenden Schließkraft resultiert, mittels der der Ventilkörper (34) in Richtung eines den Strömungsweg (40) sperrenden Betriebszustandes betätigbar ist, zwischen den Strömungsweg (40) sperrenden und den Strömungsweg (40) zumindest teilweise freigebenden Betriebszuständen und durch eine Stelleinrichtung (44) in Abhängigkeit eines Umgebungsdruckes sowie unabhängig von der resultierenden Betätigungskraft in einen den Strömungsweg (40) freigebenden Betriebszustand überführbar ist, **dadurch gekennzeichnet, dass** der Strömungsweg (40) zumindest über die Stelleinrichtung (44) in einem Umfang freigebbar ist, dass ein Strömungsquerschnitt des Strömungswegs (40) über den gesamten Verlauf des Strömungswegs (40) zwischen dem Ventileinlass (37) und dem Ventilauslass (52) mindestens 80 % des Strömungsquerschnittes des Strömungsweges (40) im Bereich des Ventileinlasses (37) entspricht.

2. Ventilvorrichtung nach Anspruch 1, **dadurch gekennzeichnet, dass** der Strömungsweg (40) zumindest über die Stelleinrichtung (44) in einem Umfang freigebbar ist, dass der Strömungsquerschnitt über den gesamten Verlauf des Strömungswegs (40) zwischen dem Ventileinlass (37) und dem Ventilauslass (52) mindestens 100 % des Strömungsquerschnittes des Strömungsweges (40) im Bereich des Ventileinlasses (37) entspricht.

3. Ventilvorrichtung nach einem der Ansprüche 1 oder 2, **dadurch gekennzeichnet, dass** den Strömungsweg (40) begrenzende Bereiche des Ventilkörpers (34) und/oder des Ventilsitzes (33) jeweils wenigstens einen Krümmungsradius (54) aufweisen, deren Betrag jeweils mindestens dem einhundertfünfzigsten Teil des Betrages des Strömungsquerschnittes des Strömungsweges (40) im Bereich des Ventileinlasses (37) entspricht.

4. Ventilvorrichtung nach Anspruch 3, **dadurch gekennzeichnet, dass** die Krümmungsradien (54) jeweils mindestens 1,5 mm groß sind.

5. Ventilvorrichtung nach einem der Ansprüche 1 bis 4, **dadurch gekennzeichnet, dass** die dem Ventileinlass (37) zugewandte Stirnfläche (36) des Ventilkörpers (34) zumindest bereichsweise eine wenigstens annähernd sphärisch ausgeführte Oberfläche aufweist.

6. Ventilvorrichtung nach einem der Ansprüche 1 bis 5, **dadurch gekennzeichnet, dass** eine den Ventilkörper (34) und den Ventilsitz (33) zumindest bereichsweise umfassende Wandung (35) vorgesehen ist, die mit in Bezug auf den Ventileinlass (37) stromab des Ventilsitzes (33) angeordneten und in Umfangsrichtung zueinander beabstandeten Auslassöffnungen (39) ausgebildet ist.

7. Ventilvorrichtung nach Anspruch 6, **dadurch gekennzeichnet, dass** die Wandung (35) radial innerhalb eines koaxial zur Wandung (35) angeordneten Gehäuses (42) angeordnet ist und in radialer Richtung von dem Gehäuse (42) beabstandet ist, wobei das Gehäuse (42) wenigstens eine Austrittsöffnung des Ventilauslasses (52) aufweist.

8. Ventilvorrichtung nach einem der Ansprüche 1 bis 7, **dadurch gekennzeichnet, dass** die Stelleinrichtung (44) ein zwischen einer ersten Position und einer zweiten Position verlagerbares und mit dem Ventilkörper (34) zusammenwirkendes Stellelement (45) aufweist, wobei der Ventilkörper (34) in der ersten Position des Stellelementes (45) in einen den Strömungsweg (40) sperrenden Betriebszustand überführbar ist, während der Ventilkörper (34) in der zweiten Position des Stellelementes (45) in den den Strömungsweg freigebenden Betriebszustand überführt ist.

9. Ventilvorrichtung nach Anspruch 8, **dadurch gekennzeichnet, dass** ein Aktor (61) vorgesehen ist, mittels dem das Stellelement (45) zwischen der ersten Position und der zweiten Position verlagerbar ist.

10. Ventilvorrichtung nach Anspruch 9, **dadurch gekennzeichnet, dass** das Stellelement (45) über den Aktor (61) elektromagnetisch verlagerbar ist.

11. Ventilvorrichtung nach einem der Ansprüche 1 bis 10, **dadurch gekennzeichnet, dass** die Stelleinrichtung (44) mit einem Federbalg (48) ausgeführt ist, der einen luftdichten Hohlraum begrenzt, wobei eine Höhe des Federbalges (48) in Stellrichtung des Ventilkörpers (34) in Abhängigkeit eines Umgebungsdruckes des Federbalges (48) variiert.

12. Ventilvorrichtung nach Anspruch 8, **dadurch gekennzeichnet, dass** die Stelleinrichtung (44) eine mit Druckluft beaufschlagbare Druckkammer (71) aufweist, die zumindest bereichsweise von dem Stellelement (45) begrenzt ist.

13. Ventilvorrichtung nach einem der Ansprüche 8 bis 12, **dadurch gekennzeichnet, dass** am Stellelement (45) der Stelleinrichtung (44) eine in Richtung der zweiten Position des Stellelementes (45) wirkende Federkraft einer Federeinrichtung (62; 72) angreift.

14. Ventilvorrichtung nach einem der Ansprüche 1 bis 13, **dadurch gekennzeichnet, dass** der Ventilkörper (34) über eine Federeinrichtung (41) mit einer in Richtung seiner Schließposition wirkenden Federkraft beaufschlagt ist.

15. Strahltriebwerk (1) mit einer Einrichtung (17) zum Abscheiden von Öltropfen aus einem Luft-Öl-Volumenstrom, mit einer Tankvorrichtung (18) und mit einer im Bereich der Tankvorrichtung (19) angeordneten Ventilvorrichtung (32, 60, 70) nach einem der Ansprüche 1 bis 14, wobei über den Ventileinlass (37) der Ventilvorrichtung (32, 60, 70) ein Luft-Öl-Volumenstrom in die Ventilvorrichtung (32, 60, 70) einleitbar und über eine Führungseinrichtung (29) vom Ventilauslass (52) der Ventilvorrichtung (32, 60, 70) zu der Einrichtung (17) zum Abscheiden vorgesehen ist.
